# EUROPEAN PATENT SPECIFICATION

(11) **EP 3 732 059 B1**
(45) Date of publication and mention of the grant of the patent: **19.07.2023**
(21) Application number: 18894759.2
(22) Date of filing: 17.12.2018
(51) Int. Cl.: B60B 25/06, B60B 3/02, B60B 21/02, B60B 3/06

(54) **WHEEL HAVING A STIFFENING RIB**
RAD MIT VERSTEIFUNGSRIPPE
ROUE AYANT UNE NERVURE DE RAIDISSEMENT

(30) Priority: 29.12.2017 US 201762612061 P
(43) Date of publication of application: 04.11.2020
(73) Proprietor: Howmet Aerospace Inc., Pittsburgh, PA 15212-5858 (US)
(72) Inventor: SKLYUT, Henry, Delmont, PA 15626 (US); PEER, Gregory, L., Rancho Palos Verdes, CA 90275 (US); CICCOLA, Gabriele, F., Hudson, OH 44236 (US); PRASAD, Santosh, Murrysville, PA 15668 (US); FULTON, Erin, Irwin, PA 15642 (US); PACEK, Michael, A., Freeport, PA 16229 (US); BURG, James, T., Verona, PA 15147 (US); DEGEORGE, Grant, Strongsville, OH 44149 (US); ROVITO, Anton, J., Parma, OH 44134 (US); CARRAHER, Courtney, Bay Village, OH 44140 (US); AU, Christopher, A., Hinckley, OH 44233 (US)
(74) Representative: Forresters IP LLP
(86) International application number: PCT/US2018/065904
(87) International publication number: WO 2019/133318

(56) References cited:
- EP-A1- 2 527 160
- CN-A- 107 405 946
- DE-A1-102006 056 229
- JP-A- H 106 705
- JP-A- 2008 137 562
- JP-A- 2012 091 576
- US-A- 5 350 220
- US-A- 5 350 220
- US-A- 6 035 913
- US-A1- 2010 123 350
- US-A1- 2012 286 562

## Description

### CROSS REFERENCE TO RELATED APPLICATIONS

This application claims the benefit of U.S. Provisional Application No. 62/612,061, filed December 29, 2017, entitled Wheel Having a Stiffening Rib.

### BACKGROUND

Conventionally, reducing the weight of a wheel results in increased local stresses and displacements under a target load. An increase in such stresses and displacements can negatively impact wheel performance by, for example, reducing maximum service life of the wheel, reducing the maximum load rating of the wheel.

### SUMMARY

In order to limit an increase in stresses with the target load a local moment of inertia can be increased to improve the bending stiffness which will help to reduce the stresses under the same load. The present invention relates to a wheel rim for providing reduced weight at a constant load rating. In particular, the wheel rim can include one or more ribs in order to permit weight reduction without negatively impacting load ratings, stresses and/or tire pressure ratings of the wheel and without risking brake interference.

According to a first aspect of the present invention, a wheel is provided. The wheel includes a disc face. The wheel also includes an open end opposing the disc face. The wheel also includes a wheel rim extending between the disc face and the open end. The wheel rim includes a rib extending radially inward from the rim. Such a wheel is for example known from US 5350220 A. According to the present invention the wheel rim also includes a rim section including the rib, wherein a centroid of the rib is positioned proximate a longitudinal center of the rim section, the rim section having a second moment of area configured to enable the wheel to have a) a substantially similar load rating and/or tire pressure rating as a wheel of similar size, and b) a lower weight than the wheel of similar size.

In some embodiments of the invention, , the disc face is positioned at a disc end of the wheel. In some embodiments, the wheel also includes a second open end, the disc face positioned between the open end and the second open end. In some embodiments, the wheel complies with SAE J1865 brake clearance standards. In some embodiments, a weight of the wheel is between 15.4 kg to 17.7 kg (34 pounds to 39 pounds). In some embodiments, the weight of the wheel is between 15.4 kg to 17.2 kg (34 pounds to 38 pounds). In some embodiments, the weight of the wheel is between 15.9 kg to 16.3 kg (35 pounds to 36 pounds). In some embodiments, the rib extends between 0.701 cm to 1.501 cm (0.276 in to 0.591 in) radially inward. In some embodiments, the rib extends between 0.701 cm to 1.400 cm (0.276 in to 0.551 in) radially inward. In some embodiments, the rib extends between 0.701 cm to 1.300 cm (0.276 in to 0.512 in) radially inward. In some embodiments, the rib extends between 0.701 cm to 1.199 cm (0.276 in to 0.472 in) radially inward. In some embodiments, the rib extends between 0.701 cm to 1.100 cm (0.276 in to 0.433 in) radially inward. In some embodiments, the rib extends between 0.701 cm to 1.001 cm (0.276 in to 0.394 in) radially inward. In some embodiments, rib extends between 0.701 cm to 0.899 cm (0.276 in to 0.354 in) radially inward. In some embodiments, the rib extends 0.800 cm (0.315 in) radially inward. In some embodiments, the rim section includes a second moment of area between 6243 mm⁴ to 24972 mm⁴ (0.0150 in⁴ to 0.0600 in⁴). In some embodiments, the rim section includes a second moment of area between 7075 mm⁴ to 16648 mm⁴ (0.0170 in⁴ to 0.0400 in⁴). In some embodiments, the rim section includes a second moment of area between 8324 mm⁴ to 12486 mm⁴ (0.0200 in⁴ to 0.0300 in⁴). In some embodiments, the rim section extends from the centroid of the rib to the open end, and a substantially equal distance from the centroid of the rib toward the disc face. In some embodiments, the wheel rim further comprises a tire side profile including an open end flange, a disc face flange, a first angle wall extending from the disc face flange toward the open end flange, a second angle wall extending from the open end flange toward the disc face flange, and a drop well connecting the first angle wall and the second angle wall. In some embodiments, the wheel is formed from at least one of steel, aluminum, steel alloys, aluminum alloys, or combinations thereof. In some embodiments, the wheel is formed from a 6xxx aluminum alloy.

In some embodiments, the weight of the wheel is between 22.7 kg to 23.6 kg (50 pounds to 52 pounds). In some embodiments, the weight of the wheel is between 23.0 kg to 23.2 kg (50.8 pounds to 51.2 pounds). In some embodiments, the rib extends between 0.100 cm to 1.501 cm (0.0394 in to 0.591 in) radially inward. In some embodiments, the rib extends between 0.200 cm to 0.399 cm (0.0787 in to 0.157 in) radially inward. In some embodiments, the rib extends between 0.300 cm to 0.399 cm (0.118 in to 0.157 in) radially inward. In some embodiments, the rim section includes a second moment of area between 4994 mm⁴ to 16648 mm⁴ (0.0120 in⁴ to 0.040 in⁴). In some embodiments, the rim section includes a second moment of area between 4994 mm⁴ to 8324 mm⁴ (0.0120 in⁴ to 0.020 in⁴). In some embodiments, the rim section includes a second moment of area between 4994 mm⁴ to 5827 mm⁴ (0.0120 in⁴ to 0.0140 in⁴). In some embodiments, the rim section extends from the centroid of the rib to the open end, and a substantially equal distance from the centroid of the rib toward the disc face. In some embodiments, the wheel rim further comprises a tire side profile including an open end flange, a disc face flange, a first angle wall extending from the disc face flange toward the open end flange, a second angle wall extending from the open end flange toward the disc face flange, and a drop well connecting the first angle wall and the second angle wall. In some embodiments, the wheel is formed from at least one of steel, aluminum, steel alloys, aluminum alloys, or combinations thereof. In some embodiments, the wheel is formed from a 6xxx aluminum alloy.

In some embodiments, a method is provided. The method includes at least one of forging, casting, or machining a wheel, the wheel having a disc face, an open end opposing the disc face, and a wheel rim extending between the disc face and the open end. The wheel rim includes a rib extending radially inward from the rim. The wheel rim also includes a rim section including the rib, wherein a centroid of the rib is positioned proximate a longitudinal center of the rim section, the rim section having a second moment of area configured to enable the wheel to have a) a substantially similar load rating and/or tire pressure rating as a wheel of similar size, and b) a lower weight than the wheel of similar size.

In some embodiments, the wheel rim further comprises a tire side profile including an open end flange, a disc face flange, a first angle wall extending from the disc face flange toward the open end flange, a second angle wall extending from the open end flange toward the disc face flange, and a drop well connecting the first angle wall and the second angle wall. In some embodiments, the method also includes forming a valve hole in at least one of the first angle wall, the second angle wall, or the drop well. In some embodiments, the method also includes forming at least one hole in the disc face. In some embodiments, the method also includes forming a mount flange extending radially inward from the disc face. In some embodiments, the wheel is forged or cast from at least one of steel, aluminum, steel alloys, aluminum alloys, or combinations thereof. In some embodiments, the wheel is formed from a 6xxx aluminum alloy.

In some embodiments, a wheel comprises a disc face; and a rim circumscribing the disc face and extending between the disc face and an open end thereof, the rim including: a rib extending radially inward from the rim, and a rim section including the rib having a second moment of area configured to enable the wheel to have: a) a substantially similar load rating and/or tire pressure rating as a wheel of similar size without the rib; and b) a lower weight than the wheel of similar size.

In some embodiments, the wheel further comprises a second rib extending radially inward from the rim proximate the disc face.

In some embodiments, the wheel complies with SAE J1865 brake clearance standards.

In some embodiments, a weight of the wheel is between 15.4 kg to 17.7 kg (34 pounds to 39 pounds).

In some embodiments, the rib extends between 0.701 cm to 1.501 cm (0.276 in to 0.591 in) radially inward.

In some embodiments, the rib extends between 0.701 cm to 1.001 cm (0.276 in to 0.394 in) radially inward.

In some embodiments, the rim section has a second moment of area between 6243 mm⁴ to 24972 mm⁴ (0.0150 in⁴ to 0.0600 in⁴).

In some embodiments, the rim section has a second moment of area between 7075 mm⁴ to 16648 mm⁴ (0.0170 in⁴ to 0.0400 in⁴).

In some embodiments, the rim section extends: a first distance from a centroid of the rib to the open end, and a second distance substantially equal to the first distance from the centroid of the rib toward the disc face.

In some embodiments, the rim further comprises a tire side profile including: an open end flange, a disc face flange, a first angle wall extending from the disc face flange toward the open end flange; a second angle wall extending from the open end flange toward the disc face flange; and a drop well connecting the first angle wall and the second angle wall.

In some embodiments, the wheel is formed from a 6xxx aluminum alloy.

In some embodiments, the weight of the wheel is between 22.7 kg to 23.6 kg (50 pounds to 52 pounds).

In some embodiments, the rib extends between 0.100 cm to 1.501 cm (0.0394 in to 0.591 in) radially inward.

In some embodiments, the rib extends between 0.200 cm to 0.399 cm (0.0787 in to 0.157 in) radially inward.

In some embodiments, the rim section has a second moment of area between 4994 mm⁴ to 16648 mm⁴ (0.0120 in⁴ to 0.04 in⁴).

In some embodiments, the rim section has a second moment of area between 4994 mm⁴ to 5827 mm⁴ (0.0120 in⁴ to 0.0140 in⁴).

In some embodiments, the rim section extends: a first distance from a centroid of the rib to the open end, and a second distance substantially equal to the first distance from the centroid of the rib toward the disc face.

In some embodiments, the wheel is formed from a 6xxx aluminum alloy.

In a second aspect of the invention, a method for making a wheel comprises: at least one of forging, casting, or machining a wheel, the wheel having a disc face, a rim circumscribing the disc face, the rim having an open end distal to the disc face and extending between the disc face and the open end, the rim including: a rib extending radially inward therefrom, and a rim section including the rib having a second moment of area configured to enable the wheel to have: a) a substantially similar load rating and/or tire pressure rating as a wheel of similar size without the rib; and b) a lower weight than the wheel of similar size.

In some embodiments of the invention, the rim further comprises a tire side profile including: an open end flange, a disc face flange, a first angle wall extending from the disc face flange toward the open end flange; a second angle wall extending from the open end flange toward the disc face flange; and a drop well connecting the first angle wall and the second angle wall and wherein the wheel is forged or cast from a 6xxx aluminum alloy.

### BRIEF DESCRIPTION OF THE DRAWINGS

Illustrative, non-limiting example embodiments of the invention will be more clearly understood from the following detailed description taken in conjunction with the accompanying drawings.
FIGS. 1A-1H are front perspective, rear perspective, front, back, side, top, bottom, and cross-sectional views of a wheel in accordance with various embodiments.
FIGS. 2A-2G are detail views of various rib configurations of the wheel in accordance with various embodiments.

### DETAILED DESCRIPTION OF THE EMBODIMENTS

Various exemplary embodiments will be described more fully hereinafter with reference to the accompanying drawings, in which some example embodiments are shown. The present invention may, however, be embodied in many different forms and should not be construed as limited to the example embodiments set forth herein. Rather, these example embodiments are provided so that this disclosure will be thorough and complete, and will fully convey the scope of the present invention to those skilled in the art. In the drawings, the sizes and relative sizes of layers and regions may be exaggerated for clarity. Like numerals refer to like elements throughout.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

Unless otherwise defined, all terms (including technical and scientific terms) used herein have the same meaning as commonly understood by one of ordinary skill in the art to which this invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

The figures constitute a part of this specification and include illustrative embodiments of the present invention and illustrate various objects and features thereof. In addition, any measurements, specifications and the like shown in the figures are intended to be illustrative, and not restrictive. Therefore, specific structural and functional details disclosed herein are not to be interpreted as limiting, but merely as a representative basis for teaching one skilled in the art to variously employ the present invention.

Among those benefits and improvements that have been disclosed, other objects and advantages of this invention will become apparent from the following description taken in conjunction with the accompanying figures . Detailed embodiments of the present invention are disclosed herein; however, it is to be understood that the disclosed embodiments are merely illustrative of the invention that may be embodied in various forms. In addition, each of the examples given in connection with the various embodiments of the invention is intended to be illustrative, and not restrictive.

Throughout the specification and claims, the following terms take the meanings explicitly associated herein, unless the context clearly dictates otherwise. The phrases "in one embodiment" and "in some embodiments" as used herein do not necessarily refer to the same embodiment(s), though it may. Furthermore, the phrases "in another embodiment" and "in some other embodiments" as used herein do not necessarily refer to a different embodiment, although it may. Thus, as described below, various embodiments of the invention may be readily combined, without departing from the scope of the invention.

In addition, as used herein, the term "or" is an inclusive "or" operator, and is equivalent to the term "and/or," unless the context clearly dictates otherwise. The term "based on" is not exclusive and allows for being based on additional factors not described, unless the context clearly dictates otherwise. In addition, throughout the specification, the meaning of "a," "an," and "the" include plural references. The meaning of "in" includes "in" and "on".

Embodiments of the present disclosure generally apply to wheels. The various embodiments of the present disclosure can provide single piece heavy duty wheels having a high load rating and a high tire inflation pressure rating for use in connection with wheeled vehicles such as, for example, cars, trucks, buses, aircraft landing gear, amphibious vehicles, or any other wheeled vehicle.

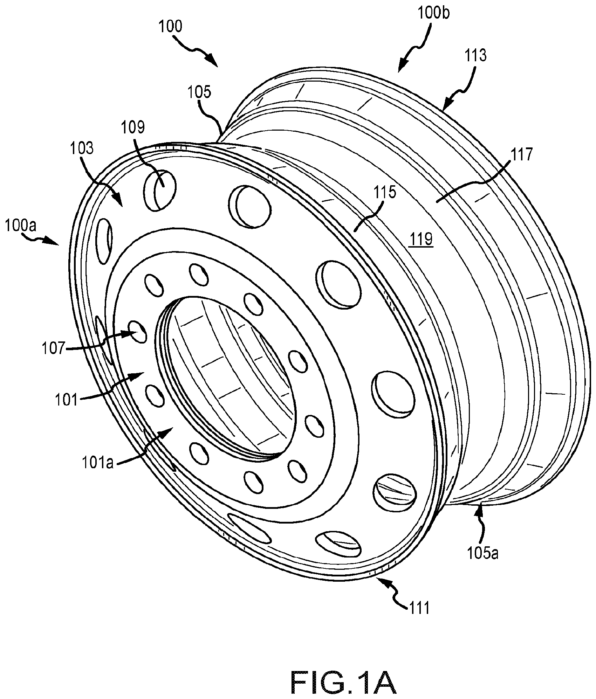

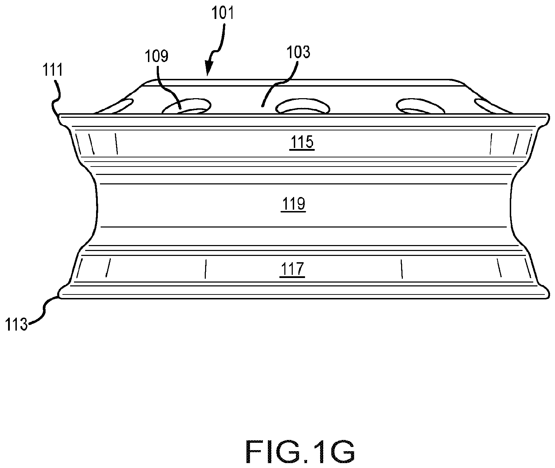

FIGS. 1A-1H illustrate a wheel 100 having a disc end 100a and an opposing open end 100b in accordance with various embodiments of the present invention. The wheel 100 can include a mount flange 101 at the disc end 100a extending radially inward from a disc face 103 for mounting the wheel 100 to a wheel hub (not shown). The wheel 100 can also include a wheel rim 105 extending between the disc face 103 and the open end 100b and a rib 129 extending radially inward from the rim 105. However, it will be apparent in view of this invention that other wheel configurations can be used in accordance with various embodiments. For example, in some embodiments (not shown), the mount flange and disc face can be positioned between two open ends of the rim.

The mount flange 101, in accordance with various embodiments, can include one or more bolt holes 107 extending therethrough for bolting or otherwise fastening the wheel 100 to the wheel hub. Although the mount flange 101 is shown in FIGS. 1A-1H as having 10 bolt holes 107, it will be apparent in view of this invention that any number and/or size bolt holes 107 can be used in accordance with various embodiments to permit engagement between the mount flange 101 and any complimentary wheel hub design.

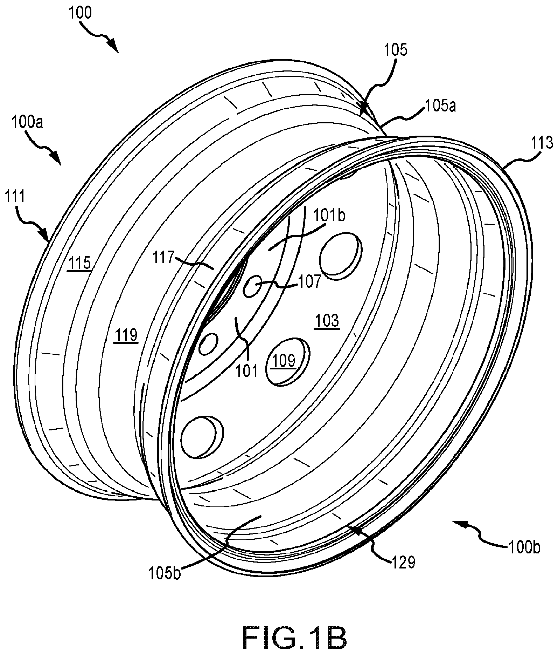

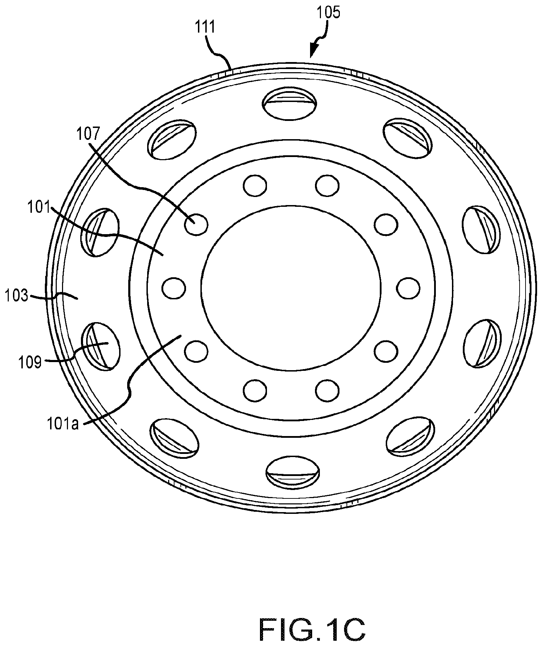

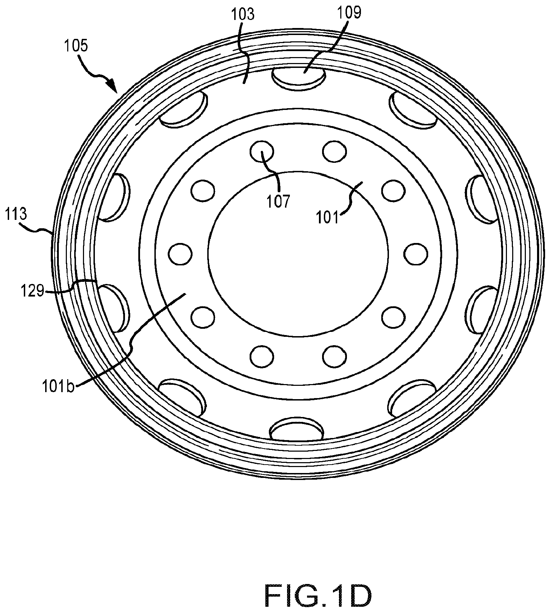

As shown in FIGS. 1A and 1C, the mount flange 101, in accordance with various embodiments, can include a substantially planar outer face 101a for providing a stable bearing surface for engagement with one or more bolt heads of one or more bolts when the wheel 100 is bolted to the wheel hub. As shown in FIGS. 1B and 1D, the mount flange 101, in accordance with various embodiments can also include a substantially planar inner face 101b for providing a stable bearing surface for engagement with the wheel hub when the wheel 100 is bolted to the wheel hub.

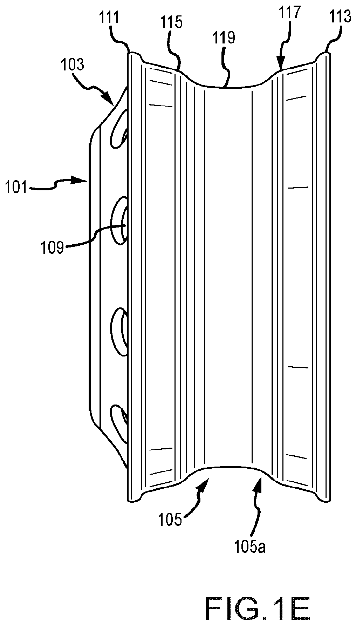

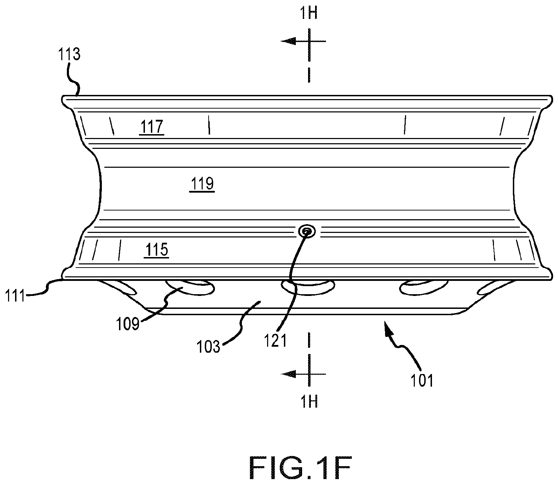

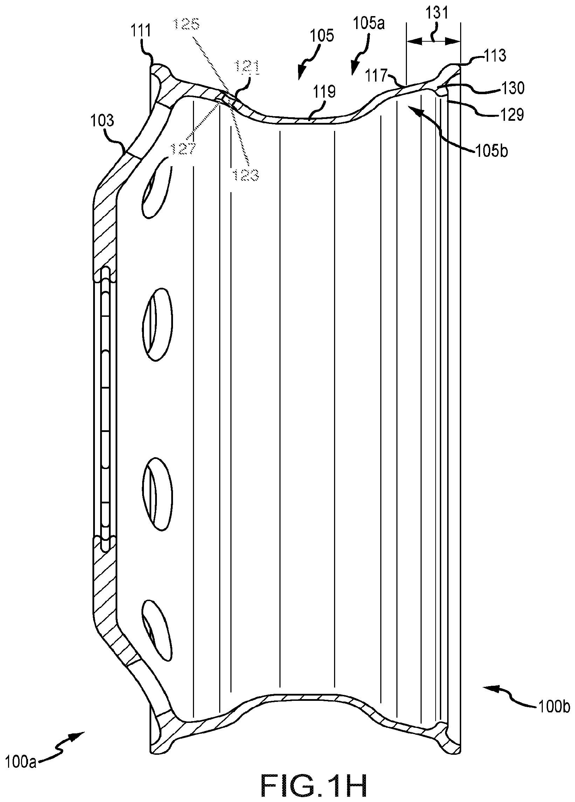

As shown in FIGS. 1A, 1C, 1E, 1F, and 1H, the disc face 103, in accordance with various embodiments, can extend substantially conically between the mount flange 101 and the wheel rim 105 for providing a transition and structural support between the wheel rim 105 and the mount flange 101. However, it will be apparent in view of this invention that the disc face 103 may not be conical and can instead extend radially between the mount flange 101 and the wheel rim 105. The disc face 103, in accordance with various embodiments, can include one or more hand holes 109 extending therethrough for permitting handling of the wheel, for providing cooling ventilation to a brake or brakes proximate the wheel, and/or for providing accessibility to a valve hole 121 for inflation and valve installation. Although the disc face 103 is shown in FIGS. 1A-1H as having 10 hand holes 109, it will be apparent in view of this invention that any number and/or size and/or shape hand holes 109 can be used in accordance with various embodiments.

The wheel rim 105, in accordance with various embodiments, can be configured for mounting a tire thereto. The wheel rim 105 can, in accordance with various embodiments, include an outer "tire side" 105a and an inner "inboard side" 105b. In some embodiments, the tire side 105a of the wheel rim 105 can include a disc end flange 111 at the disc end 100a, an open end flange 113 at the open end 100b, a first angle wall 115 extending from the disc end flange 111 toward the open end flange 113, a second angle wall 117 extending from the open end flange 113 toward the disc end flange 111, and a drop well 119 connecting the first angle wall 115 to the second angle wall 117. In some embodiments, the wheel rim 105 can also include a valve hole 121 extending through at least one of the first angle wall 115, the second angle wall 117, or the drop well 119.

In accordance with various embodiments, the first angle wall 115, second angle wall 117, and drop well 119 can be sized and shaped to have a tire side profile geometry conforming to the Tire and Rim Association Standard for drop center rims and flat base rims. The valve hole 121, in accordance with various embodiments, can be any size, shape, configuration, and orientation suitable for installation of an inflation valve therein. For example, in some embodiments, the valve hole 121 can include a through hole 123, a tire side counterbore 125, and an inboard counterbore 127.

The disc end flange 111 and the open end flange 113, in some embodiments, can each generally be sized and shaped to have a tire side profile geometry conforming to the Tire and Rim Association Standard for drop center rims and flat base rims. In some embodiments, particular profiles of the tire side and inboard sides of the disc end flange 111 and the open end flange 113 can be configured, within the Tire and Rim Association Standard for drop center rims and flat base rims, to assist in achieving desired load ratings and tire pressure ratings at a reduced weight without increasing the risk of the tire demounting from the rim.

In some embodiments, the disc end flange 111 and the open end flange 113 can include mirrored tire side and inboard side profile patterns. In some embodiments, the disc end flange 111 and the open end flange 113 can include different tire side and/or inboard side profile patterns while conforming to the Tire and Rim Association Standards.

The inboard side 105b of the wheel rim 105, in accordance with various embodiments, can include a rib 129 extending radially inward from the rim 105. In some embodiments, the rib 129 can extend circumferentially around the inboard side 105b of the wheel rim 105 for stiffening the wheel rim 105. It will be apparent in view of this invention in some embodiments, one or more additional ribs can be included. For example, in an embodiment (not shown) as described above wherein the disc face and mount flange are positioned between two open ends of the rim, one rib can be included on either side of the disc face, proximate each open end of the rim. It will further be apparent in view of this invention that the rib 129 can be formed in any size and/or shape that is compliant with brake clearance requirements and imparts a desired increase in second moment of area to the wheel 100 to support a desired reduced weight.

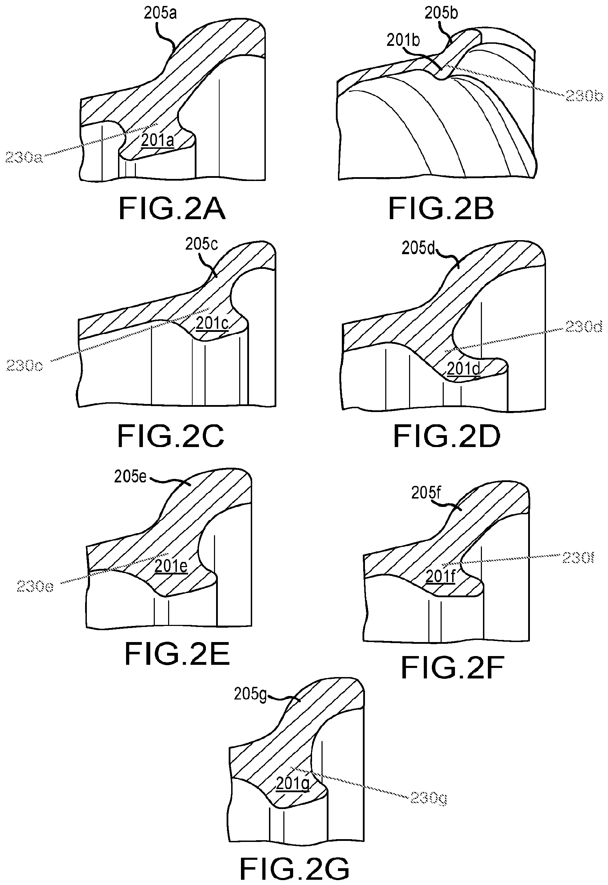

For example, in some embodiments, use of any of the ribs 201a-201g depicted in FIGS. 2A-2G can provide for a weight reduction from a 18.1 kg (40 lb) aluminum wheel to an aluminum wheel weighing less than 16.3 kg (36 lbs), without reducing load ratings, tire pressure ratings, or part life. In addition, the ribs 129, 201a-201g can provide the reduced weight wheel with sufficient second moment of area and geometric clearance to comply with SAE J1865 brake clearance standards. To that end, in some embodiments, the rib 129 can extend radially inward by about 1.501 cm (about 0.591 in) or less (e.g., by about 0.701 cm to about 1.501 cm (about 0.276 in to about 0.591 in), by about 0.701 cm to about 1.400 cm (about 0.276 in to about 0.551 in), by about 0.701 cm to about 1.300 cm (about 0.276 in to about 0.512 in), by about 0.701 cm to about 1.199 cm (about 0.276 in to about 0.472 in), by about 0.701 cm to about 1.100 cm (about 0.276 in to about 0.433 in), by about 0.701 cm to about 1.001 cm (about 0.276 in to about 0.394 in), by about 0.701 cm to about 0.899 cm (about 0.276 in to about 0.354 in), and by about 0.701 cm to about 0.800 cm (about 0.276 in to about 0.315 in)) from the inboard side 105b of the wheel rim 105.

As shown in FIG. 1H, in some embodiments, the bending stiffness or second moment of area (also referred to as moment of inertia (MOI)), can be determined for a rim section 131 including the rib 129. In some embodiments, the rim section 131 can extend substantially equidistant from a centroid 130 of the rib 129 toward the disc end 100a and toward the open end 100b of the wheel 100. In some embodiments, the rim section 131 can extend from the centroid 130 of the rib 129 to the open end 100b and a substantially equal distance from the centroid 130 toward the disc end. Thus, the centroid 130 of the rib 129 can, in some embodiments, be located proximate a longitudinal center of the rim section 131 (in a plane containing the axis of rotation/symmetry of the wheel). In some embodiments, for example, for a wheel 100 weighing 17.7 kg (39 lbs) or less (e.g., including about 15.4 kg to about 17.7 kg (about 34 lbs to about 39 lbs), about 15.4 kg to about 17.2 kg (about 34 lbs to about 38 lbs), about 15.4 kg to about 16.8 kg (about 34 lbs to about 37 lbs), and about 15.9 kg to about 16.3 kg (about 35 lbs to about 36 lbs)), the second moment of area of the rim section 131 can be, for example, between about 6243 mm⁴ to about 24972 mm⁴ (about 0.0150 in⁴ to about 0.0600 in⁴), including about 7075 mm⁴ to about 20810 mm⁴ (about 0.0170 in⁴ to about 0.0500 in⁴), about 7075 mm⁴ to about 16648 mm⁴ (about 0.0170 in⁴ to about 0.0400 in⁴), and about 8324 mm⁴ to about 12486 mm⁴ (about 0.0200 in⁴ to about 0.0300 in⁴).

It will be apparent in view of this invention, however, that in some embodiments the rib design can be implemented in connection with wheels having any combination of wheel weight, wheel material, load rating requirements, tire pressure rating requirements, part life requirements, brake clearance requirements, bending stiffness requirements, rim section definitions, or local moments of inertia.

For example, in some embodiments, use of the rib 129 can provide for a weight reduction from a 24.0 kg (53 lb) aluminum wheel to an aluminum wheel weighing 23.1 kg (51 lbs), without reducing load ratings, tire pressure ratings, or part life. In addition, the rib 129 can provide the reduced weight wheel with sufficient second moment of area and geometric clearance to comply with applicable brake clearance standards. To that end, in some embodiments, the rib 129 can extend radially inward by about 1.501 cm (about 0.591 in) or less (e.g., by about 0.100 cm to about 0.200 cm (about 0.0394 in to about 0.0787 in), by about 0.300 cm to about 0.399 cm (about 0.118 in to about 0.157 in), and by about 0.701 cm to about 1.000 cm (about 0.276 in to about 0.394in)) from the inboard side 105b of the wheel rim 105.

Referring again to FIG. 1H, in such embodiments, the bending stiffness or second moment of area, can be determined for the rim section 131 including the rib 129. In such embodiments, for example, for a wheel 100 weighing 23.6 kg (52 lbs) or less (e.g., including about 22.7 kg to about 23.6 kg (about 50 lbs to about 52 lbs), about 22.9 kg to about 23.4 kg (about 50.4 lbs to about 51.6 lbs), and about 23.0 kg to about 23.2 kg (about 50.8 lbs to about 51.2 lbs)), the second moment of area of the rim section 131 can be, for example, between about 4786 mm⁴ to about 16648 mm⁴ (about 0.0115 in⁴ to about 0.040 in⁴), including about 4994 mm⁴ to about 5827 mm⁴ (about 0.0120 in⁴ to about 0.0140 in⁴), and about 4994 mm⁴ to about 8324 mm⁴ (about 0.0120 in⁴ to about 0.020 in⁴).

The wheel 100, in accordance with various embodiments, can be a single-piece or mutli-piece wheel made by forging, casting, or any other suitable manufacturing method for the wheel 100, for example, one or more of impression die forging, cold forging, open die forging, seamless rolled forging, any expendable mold casting (e.g., sand casting, plaster mold casting, shell molding, investment casting, low or high pressure casting), any non-expendable mold casting (e.g., permanent mold casting, die casting, centrifugal casting), gravity filled casting, low-pressure filled casting, high-pressure filled casting, vacuum casting, any other method of forging or casting, or combinations thereof. As used herein, single-piece means that the wheel 100 is formed from a single piece (e.g., casting or forging) and does not require welding, screwing, bolting, press-fitting, adhering, or otherwise fastening, attaching, or affixing separate parts. As used herein, multi-piece means that the wheel 100 is formed from at least two pieces (e.g., castings or forgings) and requires welding, screwing, bolting, press-fitting, adhering, or otherwise fastening, attaching, or affixing separate pieces. The wheel 100, in accordance with various embodiments can be made from any suitable material including, for example, steel, aluminum, steel alloys, aluminum alloys (e.g., 6xxx aluminum), any other metal, any other alloy, and/or combinations thereof.

In some embodiments, each of the features (e.g., mount flange 101, disc face 103, wheel rim 105, bolt holes 107, hand holes 109, disc end flange 111, open end flange 113, first and second angle walls 115, 117, drop well 119, and valve hole 121) of the wheel 100 can be formed during forging or casting. In some embodiments, one or more of the features of the wheel 100 can be subsequently added by any of one or more suitable techniques such as, for example, turning lathe machining, computer numerical control (CNC) machining, drilling, electrical discharge machining, electrochemical machining, any other suitable technique, and/or combinations thereof.

### Example Embodiments

FIGS. 2A-2G illustrate detail views of various example ribs 201a-201g which can, in accordance with various embodiments, be similar to, but are not limited to, the rib 129 discussed above with reference to FIGS. 1A-1H.

### Example 1

FIG. 2A illustrates a first rib 201a. For a wheel constructed of aluminum and having a weight of 16.1 kg (35.6 lb), the first rib 201a extends about 0.899 cm (about 0.354 in) radially inward from the rim 205a on the inboard side. The first rib 201a, for a rim section extending from the centroid 230a of the first rib 201a to the open end and a substantially equal distance from the centroid 230a toward the disc end, can have a second moment of area of about 9489 mm⁴ (about 0.0228 in⁴).

### Example 2

FIG. 2B illustrates a first rib 201b. For a wheel constructed of aluminum and having a weight of 16.2 kg (35.8 lb), the first rib 201a extends about 0.800 cm (about 0.315 in) radially inward from the rim 205b on the inboard side. The first rib 201b, for a rim section extending from the centroid 230b of the first rib 201b to the open end and a substantially equal distance from the centroid 230b toward the disc end, can have a second moment of area of about 7159 mm⁴ (about 0.0172 in⁴).

### Example 3

FIG. 2C illustrates a first rib 201c. For a wheel constructed of aluminum and having a weight of 16.3 kg (35.9 lb), the first rib 201c extends about 0.899 cm (0.354 in) radially inward from the rim 205c on the inboard side. The first rib 201c, for a rim section extending from the centroid 230c of the first rib 201c to the open end and a substantially equal distance from the centroid 230c toward the disc end, can have a second moment of area of about 11029 mm⁴ (0.0265 in⁴).

### Example 4

FIG. 2D illustrates a first rib 201d. For a wheel constructed of aluminum and having a weight of 15.9 kg (35.1 lb), the first rib 201d extends about 1.100 cm (0.433 in) radially inward from the rim 205d on the inboard side. The first rib 201d, for a rim section extending from the centroid 230d of the first rib 201d to the open end and a substantially equal distance from the centroid 230d toward the disc end, can have a second moment of area of about 12277.9 mm⁴ (0.0295 in⁴).

### Example 5

FIG. 2E illustrates a first rib 201e. For a wheel constructed of aluminum and having a weight of 16.3 kg (35.9 lb), the first rib 201e extends about 0.899 cm (0.354 in) radially inward from the rim 205e on the inboard side. The first rib 201e, for a rim section extending from the centroid 230e of the first rib 201e to the open end and a substantially equal distance from the centroid 230e toward the disc end, can have a second moment of area of about 11029 mm⁴ (0.0265 in⁴).

### Example 6

FIG. 2F illustrates a first rib 201f. For a wheel constructed of aluminum and having a weight of 16.2 kg (35.8 lb), the first rib 201f extends about 1.001 cm (0.394 in) radially inward from the rim 205f on the inboard side. The first rib 201f, for a rim section extending from the centroid 230f of the first rib 201f to the open end and a substantially equal distance from the centroid 230f toward the disc end, can have a second moment of area of about 10030 mm⁴ (0.0241 in⁴).

### Example 7

FIG. 2G illustrates a first rib 201g. For a wheel constructed of aluminum and having a weight of 16.3 kg (35.9 lb), the first rib 201g extends about 1.001 cm (0.394 in) radially inward from the rim 205g on the inboard side. The first rib 201g, for a rim section extending from the centroid 230g of the first rib 201g to the open end and a substantially equal distance from the centroid 230g toward the disc end, can have a second moment of area of about 10738 mm⁴ (0.0258 in⁴).

### Example 8

For a wheel constructed of aluminum and having a weight of 22.9 kg (50.4 lb) (not shown), the first rib extends about 0.200 cm (0.0787 in) radially inward from the rim on the inboard side. The first rib, for a rim section extending from the centroid of the first rib to the open end and a substantially equal distance from the centroid toward the disc end, can have a second moment of area of about 5702 mm⁴ (0.0137 in⁴).

### Example 9

For a wheel constructed of aluminum and having a weight of 23.0 kg (50.8 lb) (not shown), the first rib extends about 0.200 cm (0.0787 in) radially inward from the rim on the inboard side. The first rib, for a rim section extending from the centroid of the first rib to the open end and a substantially equal distance from the centroid toward the disc end, can have a second moment of area of about 5702 mm⁴ (0.0137 in⁴).

While a number of embodiments of the present invention have been described, it is understood that these embodiments are illustrative only, and not restrictive, and that many modifications may become apparent to those of ordinary skill in the art on the basis of the scope of the invention as defined by the appended claims.

## Claims

1. A wheel (100) comprising:
a disc face (103); and
a rim (105) circumscribing the disc face and extending between the disc face and an open end (100b) thereof, the rim including:
a rib (129) extending radially inward from the rim, **characterised in that** the rim further includes
a rim section (131) including the rib having a second moment of area configured to enable the wheel to have:
a) a substantially similar load rating and/or tire pressure rating as a wheel of similar size without the rib; and
b) a lower weight than the wheel of similar size.

2. The wheel (100) of claim 1, further comprising a second rib extending radially inward from the rim (105) proximate the disc face (103).

3. The wheel (100) of claim 1, wherein the wheel complies with SAE J1865 brake clearance standards.

4. The wheel (100) of claim 1, wherein a weight of the wheel is between 15.4 kg to 17.7 kg (34 pounds to 39 pounds).

5. The wheel (100) of claim 4, wherein the rib (129) extends between 0.701 cm to 1.501 cm (0.276 in to 0.591 in) radially inward, and preferably wherein the rib extends between 0.701 cm to 1.001 cm (0.276 in to 0.394 in) radially inward.

6. The wheel (100) of claim 4, wherein the rim section (131) has a second moment of area between 6243 mm⁴ to 24972 mm⁴ (0.0150 in⁴ to 0.0600 in⁴), and preferably wherein the rim section has a second moment of area between 7075 mm⁴ to 16648 mm⁴ (0.0170 in⁴ to 0.0400 in⁴).

7. The wheel (100) of claim 1, wherein the rim section (131) extends:
a first distance from a centroid (130) of the rib (129) to the open end (100b), and
a second distance substantially equal to the first distance from the centroid of the rib toward the disc face (103).

8. The wheel (100) of claim 1, wherein the rim (105) further comprises a tire side profile including:
an open end flange (113),
a disc face flange (111),
a first angle wall (115) extending from the disc face flange toward the open end flange;
a second angle wall (117) extending from the open end flange toward the disc face flange; and
a drop well (119) connecting the first angle wall and the second angle wall.

9. The wheel (100) of claim 1, wherein the weight of the wheel is between 22.7 kg to 23.6 kg (50 pounds to 52 pounds).

10. The wheel (100) of claim 9, wherein the rib (129) extends between 1.001 cm to 1.501 cm (0.0394 in to 0.591 in) radially inward, or between 0.200 cm to 0.399 cm (0.0787 in to 0.157 in) radially inward.

11. The wheel (100) of claim 9, wherein the rim section (131) has a second moment of area between 4994 mm⁴ to 16648 mm⁴ (0.0120 in⁴ to 0.04 in⁴), and preferably wherein the rim section has a second moment of area between 4994 mm⁴ to 5827 mm⁴ (0.0120 in⁴ to 0.0140 in⁴).

12. The wheel (100) of claim 9, wherein the rim section (131) extends:
a first distance from a centroid (130) of the rib (129) to the open end (100b), and
a second distance substantially equal to the first distance from the centroid of the rib toward the disc face (103).

13. The wheel (100) of claim 4 or claim 9, wherein the wheel is formed from a 6xxx aluminum alloy.

14. A method for making a wheel (100) comprising:
at least one of forging, casting, or machining a wheel, the wheel having a disc face (103), a rim (105) circumscribing the disc face, the rim having an open end (100b) distal to the disc face and extending between the disc face and the open end, the rim including:
a rib (129) extending radially inward therefrom, and
a rim section (131) including the rib having a second moment of area configured to enable the wheel to have:
a) a substantially similar load rating and/or tire pressure rating as a wheel of similar size without the rib; and
b) a lower weight than the wheel of similar size.

15. The method of claim 14, wherein the rim (105) further comprises a tire side profile including:
an open end flange (113),
a disc face flange (111),
a first angle wall (115) extending from the disc face flange toward the open end flange;
a second angle wall (117) extending from the open end flange toward the disc face flange; and
a drop well (119) connecting the first angle wall and the second angle wall and wherein the wheel is forged or cast from a 6xxx aluminum alloy.

## Patentansprüche

1. Rad (100), das Folgendes umfasst:
eine Scheibenseite (103); und
eine Felge (105), die die Scheibenseite umschreibt und sich zwischen der Scheibenseite und einem offenen Ende (100b) davon erstreckt, wobei die Felge Folgendes einschließt:
eine Rippe (129), die sich von der Felge radial nach innen erstreckt, **dadurch gekennzeichnet, dass** die Felge ferner einen Felgenabschnitt (131) einschließlich der Rippe einschließt, die ein zweites Flächenmoment aufweist, das konfiguriert ist, um dem Rad zu ermöglichen, Folgendes aufzuweisen:
a) eine im Wesentlichen ähnliche Tragfähigkeitsbewertung und/oder eine ähnliche Reifendruckbewertung wie ein Rad ähnlicher Größe ohne die Rippe; und
b) ein geringeres Gewicht als ein Rad ähnlicher Größe.

2. Rad (100) nach Anspruch 1, das ferner eine zweite Rippe aufweist, die sich von der Felge (105) in der Nähe der Scheibenseite (103) radial nach innen erstreckt.

3. Rad (100) nach Anspruch 1, wobei das Rad die Normen für das Bremsspiel SAE J1865 erfüllt.

4. Rad (100) nach Anspruch 1, wobei das Gewicht des Rades zwischen 15,4 kg bis 17,7 kg (34 Pfund bis 39 Pfund) liegt.

5. Rad (100) nach Anspruch 4, wobei sich die Rippe (129) zwischen 0,701 cm bis 1,501 cm (0,276 in bis 0,591 in) radial nach innen erstreckt, und wobei sich die Rippe vorzugsweise zwischen 0,701 cm bis 1,001 cm (0,276 in bis 0,394 in) radial nach innen erstreckt.

6. Rad (100) nach Anspruch 4, wobei der Felgenabschnitt (131) ein zweites Flächenmoment zwischen 6243 mm4 bis 24972 mm4 (0,0150 in4 bis 0,0600 in4) aufweist, und wobei der Felgenabschnitt vorzugsweise ein zweites Flächenmoment zwischen 7075 mm4 bis 16648 mm4 (0,0170 in4 bis 0,0400 in4) aufweist.

7. Rad (100) nach Anspruch 1, wobei der Felgenabschnitt (131) sich erstreckt über:
einen ersten Abstand von einem Schwerpunkt (130) der Rippe (129) zu dem offenen Ende (100b), und
einen zweiten Abstand, der im Wesentlichen gleich dem ersten Abstand vom Schwerpunkt der Rippe in Richtung der Scheibenseite (103) ist.

8. Rad (100) nach Anspruch 1, wobei die Felge (105) ferner ein Reifenseitenprofil aufweist, das Folgendes einschließt:
ein Felgenhorn am offenen Ende (113),
ein Felgenhorn an der Scheibenseite (111),
eine erste Schrägwand (115), die sich von dem Felgenhorn an der Scheibenseite in Richtung des Felgenhorns am offenen Ende erstreckt;
eine zweite Schrägwand (117), die sich von dem Felgenhorn am offenen Ende in Richtung des Felgenhorns an der Scheibenseite erstreckt; und
ein Tiefbett (119), das die erste Schrägwand und die zweite Schrägwand verbindet.

9. Rad (100) nach Anspruch 1, wobei das Gewicht des Rades zwischen 22,7 kg bis 23,6 kg (50 Pfund bis 52 Pfund) liegt.

10. Rad (100) nach Anspruch 9, wobei sich die Rippe (129) zwischen 1,001 cm bis 1,501 cm (0,0394 in bis 0,591 in) radial nach innen, oder zwischen 0,200 cm bis 0,399 cm (0,0787 in bis 0,157 in) radial nach innen erstreckt.

11. Rad (100) nach Anspruch 9, wobei der Felgenabschnitt (131) ein zweites Flächenmoment zwischen 4994 mm4 bis 16648 mm4 (0,0120 in4 bis 0,04 in4) aufweist, und wobei der Felgenabschnitt vorzugsweise ein zweites Flächenmoment zwischen 4994 mm4 bis 5827 mm4 (0,0120 in4 bis 0,0140 in4) aufweist.

12. Rad (100) nach Anspruch 9, wobei der Felgenabschnitt (131) sich erstreckt über:
einen ersten Abstand von einem Schwerpunkt (130) der Rippe (129) zu dem offenen Ende (100b), und
einen zweiten Abstand, der im Wesentlichen gleich dem ersten Abstand vom Schwerpunkt der Rippe in Richtung der Scheibenseite (103) ist.

13. Rad (100) nach Anspruch 4 oder Anspruch 9, wobei das Rad aus einer 6xxx-Aluminiumlegierung gebildet ist.

14. Verfahren zur Herstellung eines Rades (100), das Folgendes umfasst:
mindestens eines von Schmieden, Gießen oder maschinellem Bearbeiten eines Rades, wobei das Rad eine Scheibenseite (103) und eine Felge (105) aufweist, die die Scheibenseite umschreibt, wobei die Felge ein offenes Ende (100b) distal zur Scheibenseite aufweist und sich zwischen der Scheibenseite und dem offenen Ende erstreckt, wobei die Felge Folgendes einschließt:
eine Rippe (129), die sich daraus radial nach innen erstreckt, und
einen Felgenabschnitt (131) einschließlich der Rippe, die ein zweites Flächenmoment aufweist, das konfiguriert ist,
um dem Rad zu ermöglichen, Folgendes aufzuweisen:
a) eine im Wesentlichen ähnliche Tragfähigkeitsbewertung und/oder eine ähnliche Reifendruckbewertung wie ein Rad ähnlicher Größe ohne die Rippe; und
b) ein geringeres Gewicht als ein Rad ähnlicher Größe.

15. Verfahren nach Anspruch 14, wobei die Felge (105) ferner ein Reifenseitenprofil aufweist, das Folgendes einschließt:
ein Felgenhorn am offenen Ende (113),
ein Felgenhorn an der Scheibenseite (111),
eine erste Schrägwand (115), die sich von dem Felgenhorn an der Scheibenseite in Richtung des Felgenhorns am offenen Ende erstreckt;
eine zweite Schrägwand (117), die sich von dem Felgenhorn am offenen Ende in Richtung des Felgenhorns an der Scheibenseite erstreckt; und
ein Tiefbett (119), das die erste Schrägwand und die zweite Schrägwand verbindet, und wobei das Rad aus einer 6xxx-Aluminiumlegierung geschmiedet oder gegossen ist.

## Revendications

1. Roue (100) comprenant :
une face de disque (103) ; et
une jante (105) entourant la face de disque et s'étendant entre la face de disque et une extrémité ouverte (100b) de celle-ci, la jante comportant :
une nervure (129) s'étendant radialement vers l'intérieur à partir de la jante, **caractérisée en ce que** la jante comporte en outre
une section de jante (131) comportant la nervure ayant un second moment de surface configuré pour permettre à la roue d'avoir :
a) un indice de charge et/ou un indice de pression des pneus sensiblement similaires à ceux d'une roue de taille similaire sans la nervure ; et
b) un poids inférieur à la roue de taille similaire.

2. Roue (100) selon la revendication 1, comprenant en outre une seconde nervure s'étendant radialement vers l'intérieur à partir de la jante (105) à proximité de la face de disque (103).

3. Roue (100) selon la revendication 1, dans laquelle la roue est conforme aux normes de jeu de frein SAE J1865.

4. Roue (100) selon la revendication 1, dans laquelle un poids de la roue est compris entre 15,4 kg et 17,7 kg (34 livres et 39 livres).

5. Roue (100) selon la revendication 4, dans laquelle la nervure (129) s'étend entre 0,701 cm et 1,501 cm (0,276 po à 0,591 po) radialement vers l'intérieur, et de préférence dans laquelle la nervure s'étend entre 0,701 cm et 1,001 cm (0,276 po à 0,394 po) radialement vers l'intérieur.

6. Roue (100) selon la revendication 4, dans laquelle la section de jante (131) a un second moment de surface entre 6243 mm⁴ et 24972 mm⁴ (0, 0150 po⁴ à 0, 0600 po⁴), et de préférence dans laquelle la section de jante a un second moment de surface entre 7075 mm⁴ et 16648 mm⁴ (0,0170 po⁴ et 0,0400 po⁴).

7. Roue (100) selon la revendication 1, dans laquelle la section de jante (131) s'étend :
sur une première distance à partir d'un centroïde (130) de la nervure (129) vers l'extrémité ouverte (100b), et
une seconde distance sensiblement égale à la première distance à partir du centroïde de la nervure vers la face de disque (103).

8. Roue (100) selon la revendication 1, dans laquelle la jante (105) comprend en outre un profil latéral de pneumatique comportant :
une bride d'extrémité ouverte (113),
une bride de face de disque (111),
une première paroi angulaire (115) s'étendant à partir de la bride de face de disque vers la bride d'extrémité ouverte ;
une seconde paroi angulaire (117) s'étendant à partir de la bride d'extrémité ouverte vers la bride de face de disque ; et
un puits de descente (119) reliant la première paroi angulaire et la seconde paroi angulaire.

9. Roue (100) selon la revendication 1, dans laquelle le poids de la roue est compris entre 22,7 kg et 23,6 kg (50 livres et 52 livres).

10. Roue (100) selon la revendication 9, dans laquelle la nervure (129) s'étend entre 1,001 cm et 1,501 cm (0,0394 po et 0,591 po) radialement vers l'intérieur, ou entre 0,200 cm et 0,399 cm (0,0787 po et 0,157 po) radialement vers l'intérieur.

11. Roue (100) selon la revendication 9, dans laquelle la section de jante (131) a un second moment de surface entre 4994 mm⁴ et 16648 mm⁴ (0,0120 po⁴ et 0,04 po⁴), et de préférence dans laquelle la section de jante a un second moment de surface entre 4994 mm⁴ et 5827 mm⁴ (0,0120 po⁴ et 0,0140 po⁴).

12. Roue (100) selon la revendication 9, dans laquelle la section de jante (131) s'étend :
sur une première distance à partir d'un centroïde (130) de la nervure (129) vers l'extrémité ouverte (100b), et
une seconde distance sensiblement égale à la première distance à partir du centroïde de la nervure vers la face de disque (103).

13. Roue (100) selon la revendication 4 ou la revendication 9, dans laquelle la roue est formée d'un alliage d'aluminium 6xxx.

14. Procédé de fabrication d'une roue (100) comprenant :
au moins l'un du forgeage, du moulage ou de l'usinage d'une roue, la roue ayant une face de disque (103), une jante (105) entourant la face de disque, la jante ayant une extrémité ouverte (100b) distale par rapport à la face de disque et s'étendant entre la face de disque et l'extrémité ouverte, la jante comportant :
une nervure (129) s'étendant radialement vers l'intérieur à partir de celle-ci, et
une section de jante (131) comportant la nervure ayant un second moment de surface configuré pour permettre à la roue d'avoir :
a) un indice de charge et/ou un indice de pression des pneus sensiblement similaires à ceux d'une roue de taille similaire sans la nervure ; et
b) un poids inférieur à la roue de taille similaire.

15. Procédé selon la revendication 14, dans lequel la jante (105) comprend en outre un profil latéral de pneumatique comportant :
une bride d'extrémité ouverte (113),
une bride de face de disque (111),
une première paroi angulaire (115) s'étendant à partir de la bride de face de disque vers la bride d'extrémité ouverte ;
une seconde paroi angulaire (117) s'étendant à partir de la bride d'extrémité ouverte vers la bride de face de disque ; et
un puits de descente (119) reliant la première paroi angulaire et la seconde paroi angulaire et dans lequel la roue est forgée ou moulée à partir d'un alliage d'aluminium 6xxx.
